Europäisches Patentamt

European Patent Office

Office européen des brevets

(19)

(11) **EP 0 993 491 B1**

(12) **FASCICULE DE BREVET EUROPEEN**

(45) Date de publication et mention
de la délivrance du brevet:
**25.09.2002 Bulletin 2002/39**

(21) Numéro de dépôt: **97930598.4**

(22) Date de dépôt: **26.06.1997**

(51) Int Cl.[7]: **C09D 5/32**, F24J 2/48,
G01J 5/20

(86) Numéro de dépôt international:
**PCT/FR97/01145**

(87) Numéro de publication internationale:
**WO 99/000458 (07.01.1999 Gazette 1999/01)**

(54) **DISPOSITIFS POUR L'ABSORPTION DU RAYONNEMENT INFRAROUGE COMPRENANT UN
ELEMENT EN ALLIAGE QUASI-CRISTALLIN**

VORRICHTUNGEN ZUR ABSORPTION VON INFRAROTSTRAHLUNG MIT EINEM ELEMENT AUS
EINER QUASIKRISTALL-LEGIERUNG

DEVICES FOR ABSORBING INFRARED RADIATION COMPRISING A QUASI-CRYSTALLINE
ELEMENT

(84) Etats contractants désignés:
**AT BE CH DE ES FR GB GR IT LI NL PT SE**

(43) Date de publication de la demande:
**19.04.2000 Bulletin 2000/16**

(73) Titulaires:
• **CENTRE NATIONAL DE
LA RECHERCHE SCIENTIFIQUE (CNRS)
75016 Paris (FR)**
• **SOCIETE NOUVELLE DE METALLISATION
INDUSTRIES SNMI
F-84008 Avignon (FR)**

(72) Inventeurs:
• **DUBOIS, Jean, Marie
F-54340 Pompey (FR)**
• **MACHIZAUD, Francis
F-54500 Vandoeuvre les Nancy (FR)**

(74) Mandataire: **Des Termes, Monique et al
Société Brevatome
3, rue du Docteur Lancereaux
75008 Paris (FR)**

(56) Documents cités:
**EP-A- 0 504 048          DE-A- 19 620 645
DE-C- 4 425 140          FR-A- 2 693 185
FR-A- 2 744 839**

• **T. EISENHAMMER ET AL: "Selective absorbers
based on AlCuFe thin films" SOLAR ENERGY
MATERIALS AND SOLAR CELLS., vol. 46, no. 1,
1 avril 1997, AMSTERDAM NL, pages 53-65,
XP000688391**
• **T. EISENHAMMER: "Quasicrystal films:
numerical optimization as a solar selective
absorber" THIN SOLID FILMS., vol. 270, no. 1-2,
1 décembre 1995, LAUSANNE CH, pages 1-5,
XP000595200**

**Description**

La présente invention concerne l'utilisation des alliages quasi-cristallins pour l'absorption du rayonnement infrarouge, ainsi que des dispositifs pour l'absorption du rayonnement infrarouge comprenant un élément en alliage quasi-cristallin.

On connaît différents types de dispositifs absorbant le rayonnement infrarouge. On connaît en particulier les dispositifs qui réalisent la conversion photothermique du rayonnement infrarouge, dans lesquels l'énergie lumineuse absorbée est convertie en chaleur. Il s'agit notamment de capteurs du rayonnement solaire qui comprennent une couche d'une peinture absorbant le rayonnement infrarouge, déposée sur un substrat. Parmi ces dispositifs, on peut citer en particulier les capteurs à fluide caloporteur ou le mur Trombe. Dans ces dispositifs, la chaleur est évacuée du milieu absorbant au travers du substrat supposé bon conducteur thermique par un fluide caloporteur d'où est extraite l'énergie récupérée. En général, les dites peintures sont constituées de matériaux organiques chargés en pigments absorbants ou de poudres de métaux très finement divisées et liées par un adjuvant organique. Les métaux ne peuvent être utilisés qu'à l'état très divisé, ou éventuellement sous forme d'un élément massif ayant une très forte rugosité de surface, car ils sont fortement réfléchissants à l'état massif et lisse. De tels matériaux résistent cependant particulièrement mal aux agressions extérieures et sont détériorés par des rayures mécaniques, l'usure ou la corrosion. Ils doivent de ce fait être protégés contre ces agressions, par exemple par des vitrages, ce qui en augmente le prix et en diminue la durabilité. De plus, l'interface formé entre la peinture absorbante et son substrat joue un rôle déterminant dans le flux de chaleur transmis au fluide caloporteur ainsi que dans la durée de vie du dispositif.

On connaît également des dispositifs dans lesquels le rayonnement infrarouge est transformé en signaux électriques. Parmi ces dispositifs, on peut citer les bolomètres dans lesquels le rayonnement infrarouge provoque une variation de la résistance d'éléments métalliques ou semi-conducteurs. Le matériau utilise pour l'absorption du rayonnement infrarouge doit avoir une forte résistivité électrique, un coefficient de température élevé et une conductance thermique faible.

On peut également citer les sondes thermiques (thermocouples) dans lesquelles on mesure la f.e.m. d'un couple de conducteurs de nature différente.

Pour tous les types de capteurs du rayonnement infrarouge utilisés comme détecteurs, il est nécessaire d'avoir un courant d'obscurité faible, ce qui implique souvent de les placer dans une enceinte refroidie destinée à réduire l'excitation thermique dans les matériaux et à limiter le flux du rayonnement ambiant.

On connaît en outre les alliages quasi-cristallins qui sont des alliages constitués d'une ou plusieurs phases quasi-cristallines. Par phase quasi-cristalline on entend une phase quasi-cristalline au sens strict, ou une phase approximante. Une phase quasi-cristalline au sens strict est une phase présentant une symétrie de rotation normalement incompatible avec la symétrie de translation, c'est-a-dire une symétrie d'axe de rotation d'ordre 5, 8, 10 ou 12, ces symétries étant révélées par la diffraction du rayonnement. A titre d'exemple, on peut citer la phase icosaédrique de groupe ponctuel m$\overline{35}$ et la phase décagonale de groupe ponctuel 10/mmm. Une phase approximante ou composé approximant est un cristal vrai dans la mesure où sa structure cristallographique reste compatible avec la symétrie de translation, mais qui présente, dans le cliché de diffraction d'électrons, des figures de diffraction dont la symétrie est proche des axes de rotation 5, 8, 10 ou 12. A titre d'exemple, on peut citer la phase orthorhombique $O_1$, caractéristique d'un alliage ayant la composition atomique $Al_{65}Cu_{20}Fe_{10}Cr_5$, dont les paramètres de maille sont : $a_o^{(1)}$ = 2,366, $b_o^{(1)}$ = 1,267, $c_o^{(1)}$ = 3,252 en nanomètres. Cette phase orthorhombique $O_1$ est dite approximante de la phase décagonale. Elle en est d'ailleurs si proche qu'il n'est pas possible de distinguer son diagramme de diffraction des rayons X de celui de la phase décagonale. On peut egalement citer la phase rhomboédrique de paramètres $a_R$ = 3,208 nm, $\alpha$ = 36°, presente dans les alliages de composition voisine de $Al_{64}Cu_{24}Fe_{12}$ en nombre d'atomes. Cette phase est une phase approximante de la phase icosaédrique. On peut aussi citer des phases $O_2$ et $O_3$ orthorhombiques de paramètres respectifs $a_o^{(2)}$ = 3,83 ; $b_o^{(2)}$ = 0,41 ; $c_o^{(2)}$ = 5,26 et $a_o^{(3)}$ = 3,25 ; $b_o^{(3)}$ = 0,41 ; $c_o^{(3)}$ = 9,8 en nanomètres, présentes dans un alliage de composition $Al_{63}Cu_{17,5}Co_{17,5}Si_2$ en nombre d'atomes ou encore la phase orthorhombique $O_4$ de paramètres $a_o^{(4)}$ = 1,46 ; $b_o^{(4)}$ = 1,23 ; $c_o^{(4)}$ = 1,24 en nanomètres, qui se forme dans l'alliage de composition $Al_{63}Cu_8Fe_{12}Cr_{12}$ en nombre d'atomes. On peut encore citer une phase C, de structure cubique, très souvent observée en coexistence avec les phases approximantes ou quasi-cristallines vraies. Cette phase qui se forme dans certains alliages Al-Cu-Fe et Al-Cu-Fe-Cr, consiste en une surstructure, par effet d'ordre chimique des éléments d'alliage par rapport aux sites d'aluminium, d'une phase de structure type Cs-Cl et de paramètre de réseau $a_1$ = 0,297nm. On peut aussi citer une phase H de structure hexagonale qui dérive directement de la phase C comme le démontrent les relations d'épitaxie observées par microscopie électronique entre cristaux des phases C et H et les relations simples qui relient les paramètres des réseaux cristallins, à savoir $a_H = 3\sqrt{2}a_1/\sqrt{3}$ (à 4,5% près) et $C_H = 3\sqrt{3}\alpha_1/2$ (à 2,5% près). Cette phase est isotype d'une phase hexagonale, notée ΦAlMn, découverte dans des alliages Al-Mn contenant 40% en poids de Mn. La phase cubique, ses surstructures et les phases qui en dérivent, constituent une classe de phases approximantes des phases quasicristallines de compositions voisines. Pour plus d'informations sur les phases quasi-cristallines au sens strict et leurs approximants, on pourra se reporter à EP-A-0 521 138 (J.M. Dubois, P. Cathonnet).

Les alliages quasi-cristallins présentent en général de bonnes propriétés mécaniques, une grande stabilité thermique, ainsi qu'une bonne résistance à la corrosion.

On connaît encore par le document DE-A-4 425 140 des convertisseurs de rayonnement électromagnétique en chaleur utilisant des matériaux quasi-cristallins, notamment en couches minces, pour l'absorption optique dans la plage spectrale solaire ($\lambda$ = 0,3 à 2 $\mu$m).

Les présents inventeurs ont maintenant trouvé que le taux d'absorption du rayonnement infrarouge de ces alliages quasi-cristallins était particulièrement élevé et qu'ils pouvaient être utilisés avantageusement dans les dispositifs destinés à absorber le rayonnement infrarouge.

En conséquence, la présente invention a pour objet l'utilisation des alliages quasi-cristallins pour l'absorption du rayonnement infrarouge, ainsi qu'un dispositif absorbant le rayonnement infrarouge, qui comprend un élément en alliage quasi-cristallin.

Un dispositif selon la présente invention, absorbant le rayonnement infrarouge est caractérisé en ce qu'il comprend comme élément absorbant le rayonnement infrarouge dans le domaine des longueurs d'onde supérieures à 2 $\mu$m un élément en alliage quasi-cristallin sous forme de couche mince d'épaisseur supérieure à 1 $\mu$m déposée sur un substrat, ledit élément étant constitué d'une ou plusieurs phases quasi-cristallines représentant au moins 40 % en volume de l'alliage quasi-cristallin, une phase quasi-cristalline étant soit une phase quasi-cristalline au sens strict qui présente des symétries de rotation normalement incompatibles avec la symétrie de translation, c'est-à-dire des symétries d'axe de rotation d'ordre 5, 8, 10 et 12, soit une phase approximante ou un composé approximant qui est un cristal vrai dont la structure cristallographique reste compatible avec la symétrie de translation, mais présente dans le cliché de diffraction d'électrons, des figures de diffraction dont la symétrie est proche des axes de rotation 5, 8, 10 ou 12.

Un alliage quasi-cristallin particulièrement préféré est un alliage dans lequel la phase quasi-cristalline est une phase icosaédrique de groupe ponctuel m$\overline{35}$ ou une phase décagonale du groupe ponctuel 10/mmm.

Les alliages quasi-cristallins dans lesquels la ou les phases quasi-cristallines représentent au moins 80 % en volume sont particulièrement préférés.

Parmi les alliages quasi-cristallins utilisables pour les dispositifs de la présente invention, on peut citer ceux qui présentent l'une des compositions nominales suivantes, qui sont données en pourcentage atomique :

- $Al_a cu_b Fe_c x_d Y_e I_g$, (1) dans laquelle X représente au moins un élément choisi parmi B, C, P, S, Ce et Si, Y représente au moins un élément choisi parmi V, Mo, Ti, Zr, Nb, Cr, Mn, Ru, Rh, Ni, Mg, W, Hf, Ta et les terres rares, I représente les impuretés d'élaboration inévitables, $0 \leq g \leq 2$, $14 \leq b \leq 30$ $7 < c < 20$, $0 < d < 5$ $2 \leq ib + c + e < 45$ et $a+b+c+d+e+g=100$;

- $Al_a Pd_b X_c Y_d T_e I_g$ (II) dans laquelle X représente au moins un métalloïde choisi parmi B, C, Si, Ge, P, et S ; Y représenta au moins un métal choisi parmi Fe, Mn, V, Ni, Cr, Zr, Hf, Mo, W, Nb, Ti, Rh, Ru, Re, Ta ; T est au moins une terre rare ; I représente les impuretés d'élaboration inévitables ; avec $a+b+c+d+e+f+g=100$ ; $17 \leq b \leq 30$ ; $0 \leq c \leq 8$ ; $5 \leq d \leq 15$ ; $0 \leq e \leq 4$ ; $0 \leq g \leq 2$ ;

- $Al_a Cu_b Co_c X_d Y_e T_f I_g$ (III) dans laquelle X représente au moins un métalloïde choisi parmi B, C, Si, Ge, P et S ; Y représente au moins un métal choisi parmi Fe, Mn, V, Ni, Cr, Zr, Hf, Mo, W, Nb; Ti, Rh, Ru, Re ; T est au moins une terre rare ; I représente les impuretés d'élaboration inévitables; avec $a+b+c+d+e+f+g=100$ ; $14 \leq b \leq 27$ ; $8 \leq c \leq 24$ ; $28 \leq b+c+e \leq 45$ ; $0 \leq f \leq 4$ ; $0 \leq d \leq 5$; $0 \leq g \leq 2$ ;

- $Al_a X_d Y_e I_g$, (IV) dans laquelle X représente au moins un élément choisi parmi B, C, P, S, Ge et Si, Y représente au moins un élément choisi parmi V, Mo, Cr, Mn, Fe, Co, Ni, Ru, Rh et Pd, I représente les impuretés d'élaboration inévitables, $0 \leq g \leq 2$, $0 \leq d \leq 5$, $18 \leq e \leq 29$, et $a+d+e+g=100$ ;

- $Al_a Cu_b Co_{b'}(B,C)_c M_d N_e I_f$ (V) dans laquelle M représente au moins un élément choisi parmi Fe, Mn, V, Ni, Cr, Ru, Os, Mo, Mg, Zn, Pd ; N représente au moins un élément choisi parmi W, Ti, Zr, Hf, Rh, Nb, Ta, Y, Si, Ge, les terres rares ; I représente les impuretés d'élaboration inévitables; avec $a+b+b'+c+d+e+f=100$ ; $a \geq 50$ ; $0 \leq b \leq 14$ ; $0 \leq b' \leq 22$ ; $0 < b+b' \leq 30$ ; $0 \leq c \leq 5$ ; $8 \leq d \leq 30$ ; $0 \leq e \leq 4$ ; $f \leq 2$.

Les alliages quasi-cristallins définis ci-dessus sont particulièrement appropriés à la réalisation d'une part de revêtements présentant une surface rugueuse, et d'autre part de revêtements présentant une porosité importante, la dimension des pores pouvant être nettement supérieure à la longueur d'onde du rayonnement infrarouge. Cette irrégularité de la surface, et tout spécialement les pores ouverts en regard du rayonnement infrarouge, constituent autant de corps noirs qui augmentent de façon considérable l'absorption du rayonnement infrarouge. Compte tenu des propriétés mecaniques de ces revêtements, ces corps noirs ne sont sensibles qu'à l'obturation par des agents extérieurs tels que les poussières. Cet inconvénient est cependant mineur car les alliages quasi-cristallins forment des surfaces faiblement adhésives, ce qui permet de les nettoyer aisément. Au contraire, les matériaux utilisés pour les dispositifs absorbant le rayonnement infrarouge de l'art antérieur sont très sensibles aux effets des poussières qui ne peuvent être retirées que par des procédés de nettoyage classique.

Les alliages quasi-cristallins sont donc bien adaptés pour une utilisation comme élément coupleur du rayonnement infrarouge sous forme d'une couche déposée sur un substrat. La couche d'alliage quasi-cristallin peut être constituée uniquement par l'alliage quasi-cristallin. Elle peut également être constituée par un mélange d'un alliage quasi-cristallin avec un autre matériau, par exemple un liant.

L'épaisseur de la couche d'alliage quasi-cristallin est comprise dans un intervalle allant de la dizaine de nanomètres a quelques dizaines de micromètres, suivant la nature du dispositif selon l'invention.

Une couche d'alliage quasi-cristallin peut être déposée sur un substrat approprié selon différents procédés.

Un premier procédé consiste a projeter sur le substrat à revêtir une poudre d'alliage quasi-cristallin à l'aide d'un dispositif de projection à chaud, telle qu'une torche à plasma ou un chalumeau à flamme supersonique. On peut également utiliser un chalumeau a flamme conventionnel alimenté par un mélange d'oxygène et de gaz combustible tel que l'acétylène ou le propane par exemple. Lorsqu'un chalumeau à flamme conventionnel est utilisé, il est preférable de l'alimenter à l'aide d'un cordon souple qui permet par exemple d'élaborer la structure quasi-cristalline directement dans la flamme, comme décrit dans EP-A-0 504 048 (J.M. Dubois, M. Ducos, R. Nury). Ces procédés mettant en oeuvre une projection à chaud permettent d'obtenir des revêtements dont l'épaisseur est comprise entre environ 10 µm et quelques centaines de µm, typiquement des revêtements dont l'épaisseur est de l'ordre du mm.

Une autre technique consiste à effectuer le dépôt à partir d'une phase vapeur. Divers procédés de dépôt en phase vapeur sont connus. A titre d'exemple, on peut citer la pulvérisation cathodique, la technique d'évaporation sous vide, et l'ablation laser. Pour chacune des techniques de dépôt en phase vapeur, on peut utiliser soit une source unique constituée par un matériau dont la composition sera ajustée de manière à obtenir la composition souhaitée sur le substrat. On peut également utiliser plusieurs sources, chacune correspondant à l'un des éléments constituant l'alliage quasi-cristallin. Lorsque plusieurs sources sont utilisées, on peut effectuer soit un dépôt simultané, soit un dépôt séquentiel. Un dépôt simultané à partir de plusieurs sources nécessite un contrôle simultané de plusieurs flux de dépôt pour obtenir la composition d'alliage voulue. Lorsque l'on dépose des couches successives à partir de plusieurs sources, il est parfois necessaire d'effectuer un traitement thermique ultérieur pour mélanger les différents éléments déposés et obtenir l'alliage quasi-cristallin. Les techniques de dépôt en phase vapeur permettent d'obtenir des couches d'alliages quasi-cristallins ayant une très faible épaisseur, typiquement inférieure à 10 µm, plus particulièrement inférieure à 0,3 µm.

Une couche d'alliage quasi-cristallin peut en outre être obtenue en enduisant un substrat d'une peinture constituée essentiellement par une poudre d'alliage quasi-cristallin et d'un liant organique. Les couches ainsi obtenues ont généralement une épaisseur supérieure à 1 µm, plus particulièrement comprise entre 5 et 50 µm.

La porosité et la rugosité des couches d'alliage quasi-cristallin obtenues dépendent du procède utilisé pour les obtenir. L'utilisation d'une torche a plasma produit des couches ayant une porosité de l'ordre de 5 à 10 %. Les couches obtenues a l'aide d'un chalumeau supersonique sont pratiquement exemptes de porosité. A l'aide d'un chalumeau oxy-gaz alimente par une poudre dont les particules ont un diamètre supérieur a 100 µm, on peut obtenir des couches poreux dont le diamètre moyen des pores est entre environ 2 et 30 µm. Les couches obtenues par les dépôts en phase vapeur sont exemptes de porosité. Les couches obtenues par application d'une peinture comprenant une poudre d'alliage quasi-cristallin et un liant organique ont en général une porosite de 15 a 30%.

L'élément coupleur du rayonnement infrarouge d'un dispositif selon la présente invention peut être constitué par un quasi-cristal monograin, qui peut être obtenu par exemple par les techniques de croissance de Bridgman ou de Czochralsky.

Un dispositif particulier selon la présente invention peut être un bolomètre, dans lequel l'alliage quasi-cristallin joue à la fois le rôle d'absorbeur du rayonnement infrarouge et d'élément sensible résistif. Dans un tel dispositif, l'alliage quasi-cristallin peut être sous forme d'une couche mince ayant de préférence une épaisseur comprise entre 0,1 et 1 µm. L'alliage quasi-cristallin peut également être utilisé sous forme d'un quasi-cristal monograin.

Un autre dispositif particulier selon la présente invention est un capteur de température, dans lequel le substrat est constitué par un thermocouple, une couche d'alliage quasi-cristallin enrobant le thermocouple. Dans un tel dispositif, la couche d'alliage quasi-cristallin a de préférence, une épaisseur comprise entre 1 et 50 µm.

Un dispositif selon la présente invention peut également être un dispositif pour la conversion photothermique, tel qu'un capteur a fluide caloporteur pour chauffage solaire (du type collecteur d'eau chaude ou du type collecteur à air), un capteur pour réfrigération solaire ou un capteur passif du type mur Trombe. Dans ce type de dispositif, l'alliage quasi-cristallin peut être déposé sur des substrats dont la forme et la nature sont très variées. Le support d'un mur Trombe est généralement un mur de béton. Dans les capteurs a fluide caloporteur, le substrat est constitué par un matériau bon conducteur de la chaleur, par exemple un acier, du cuivre ou un alliage d'aluminium, sous forme de plan, de profile, de rainuré. La couche d'alliage quasi-cristallin remplace les peintures organiques ou les dépôts de poudre métallique finement divisée utilisés dans les dispositifs de l'art antérieur. Dans le domaine de longueurs d'onde de 0,2 à 2 µm, le coefficient d'absorption du rayonnement infrarouge d'un revêtement selon la presente invention n'est inférieur que de 3 % au plus à celui d'un revêtement selectif commercial, tel que le revêtement MAXORB du commerce, sur lequel il présente néanmoins tous les avantages liés à la grande dureté, à la résistance à la corrosion ou aux rayures, inhérents aux alliages quasi-cristallins. Un revêtement selon l'invention est par conséquent compétitif pour les dispositifs de conversion photothermique de l'énergie solaire. Le dépôt du revêtement d'alliage quasi-cristallin pour ces dispositifs particuliers peut être effectué par des techniques de projection thermique, par exemple à l'aide d'une torche à plasma ou un chalumeau à poudre. Les revêtements ainsi obtenus sont intimement liés au substrat par une interface dont la tenue mécanique et la résistance à l'arrachement sont excellentes. Cette interface oppose une faible résistance thermique au flux de chaleur transmis au fluide caloporteur. La résistance à la corrosion des revêtement est particulièrement bonne ainsi que leur résistance mécanique grâce à la très grande dureté des alliages quasi-cristallins et à leur forte résistance à l'usure, à la rayure et à l'abrasion. Pour les capteurs d'énergie solaire, particulièrement exposés, ces propriétés dispensent de recourir à un vitrage protecteur.

Un autre dispositif selon la présente invention consiste en une plaque chauffante comprenant un revêtement d'alliage quasi-cristallin sur un substrat.

Une plaque chauffante peut être utilisée dans le domaine culinaire par exemple sous forme de table de cuisson, de grill, de plaque de four. On peut utiliser comme substrat le fond d'un ustensile de cuisson transparent en verre Pyrex par exemple, la couche d'alliage étant déposée à l'intérieur du récipient. Pour cette utilisation particulière, il est souhaitable d'utiliser un alliage quasi-cristallin dont la composition atomique fait partie du groupe V indiqué ci-dessus, en particulier une composition $Al_{\approx71}Cu_{\approx9}Fe_{\approx10}Cr_{\approx10}$. La face en contact avec les aliments sera intéressante pour ses propriétés anti-adhésives, la face en regard de la source de chaleur, dont elle n'est séparée que par la couche de verre qui sert de substrat, absorbera le rayonnement infrarouge.

Une plaque chauffante peut également être utilisée pour le chauffage domestique, sous forme de récupérateur de chaleur, sous forme de plaque de cheminée, ou dans les appareils de chauffage radiant ou à accumulation.

Un dispositif selon la présente invention peut aussi constituer un filtre du rayonnement infrarouge, comprenant un substrat transparent au rayonnement infrarouge revêtu d'une couche d'alliage quasi-cristallin. Le substrat peut être un substrat de quartz. L'épaisseur de la couche d'alliage quasi-cristallin est dans ce cas inférieure ou égale à 0,3 µm, et l'alliage quasi-cristallin comprend de préférence au moins 80 % en volume d'une phase quasi-cristalline ou d'un approximant.

La présente invention est décrite ci-dessous plus en détail, par référence a des exemples particuliers qui sont donnés uniquement pour illustrer l'invention. L'invention n'est cependant pas limitée à ces exemples.


**EXEMPLE 1**


**Préparation d'échantillons de référence**


On a préparé deux échantillons d'alliages quasi-cristallins, référencés E1 et E2, en vue de comparer leur état de surface et leur coefficient d'absorption du rayonnement infrarouge avec ceux de certains matériaux de l'art antérieur. On a également préparé un échantillon de chacun des métaux entrant dans la composition des alliages quasi-cristallins, notés E3 à E6.

Chacun des alliages quasi-cristallins destinés à préparer les échantillons E1 et E2 a été élaboré par fusion des éléments purs dans un champ électromagnétique haute fréquence sous atmosphère d'argon dans un creuset en cuivre refroidi. Pendant le maintien en fusion de l'alliage, une éprouvette cylindrique pleine de 25 mm de diamètre et de quelques centimètres de hauteur a été formée par aspiration du métal liquide dans un tube de quartz. La vitesse de refroidissement de cet échantillon était voisine de 500 °C par seconde. L'éprouvette refroidie a été découpée en lingotins parallélépipédiques de dimensions 5x15x15 mm à l'aide d'une scie métallographique. Ensuite, l'une des faces carrées de chaque lingotin a été polie mécaniquement selon une méthode conventionnelle, puis a l'aide d'une pâte diamantée. En fin de polissage, la rugosité arithmétique de la face polie de chaque échantillon était comprise entre 0,2 et 0,6 µm.

Des lingotins parallélépipédiques de 5x15x15 mm de chacun des métaux entrant dans la composition des alliages quasi-cristallins ont été élaborés à partir de lingots commerciaux des éléments constitutifs ayant une pureté de 99,999 pour Al, de 99,9 pour Fe, Cr et Cu. Une des faces carrées de chaque lingotin a été polie de la même manière que pour les lingotins d'alliage quasi-cristallin. La rugosité arithmétique Ra après polissage a été déterminée. Les résultats obtenus et la structure cristallographique des différents échantillons sont donnés dans le tableau 1 suivant.

TABLEAU 1

| Echant n° | Composition (% atomique) | Structure cristallographique | Ra (après polissage) |
|---|---|---|---|
| E1 | $Al_{62}Cu_{25.5}Fe_{12.5}$ | icosaédrique | 0,2 µm |
| E2 | $Al_{70}Cu_9Fe_{10.5}Cr_{10.5}$ | approximant orthorhombique de la phase décagonale | 0,2 µm |

TABLEAU 1 (suite)

| Echant n° | Composition (% atomique) | Structure cristallographique | Ra (après polissage) |
|---|---|---|---|
| E3 | aluminium métal | cubique face centrée | 0,2 μm |
| E4 | cuivre métal | cubique face centrée | 0,2 μm |
| E5 | fer métal | cubique corps centré | 0,3 μm |
| E6 | chrome métal | cubique corps centré | 0,6 μm |

## EXEMPLE 2

**Préparation de revêtements quasi-cristallins destinés à l'absorption du rayonnement infrarouge**

On a préparé des substrats revêtus d'une couche d'alliage quasi-cristallin déposée par projection thermique. Dans tous les cas, le substrat est une plaque d'acier faiblement allié préparée avant projection selon les méthodes conventionnelles pour la projection thermique.

L'échantillon R1 consiste en un revêtement de 150 μm d'épaisseur réalisé a partir d'une poudre dont la composition est identique à celle de l'échantillon E1 qui a été projetée à l'aide d'un canon supersonique JetKote® commercialisé par la société Browning.

L'échantillon R2 a été préparé de la même manière que l'échantillon R1, mais il a été soumis en plus à un polissage mécanique tel que décrit dans l'exemple 1 afin de diminuer sa rugosité.

L'échantillon R3 consiste en un revêtement de 150 μm d'épaisseur réalisé à partir d'une poudre dont la composition est identique à celle de l'échantillon E1 et déposée par projection plasma suivi d'un polissage mécanique en vue de diminuer sa rugosité.

L'échantillon R4 comprend un revêtement déposé par projection au chalumeau à flamme d'un cordon contenant une poudre d'un alliage quasi-cristallin ayant la composition de l'échantillon E2. Un tel cordon est classiquement constitué par une âme comprenant un liant organique et une poudre d'alliage quasi-cristallin ou un mélange de poudres apte à former un alliage quasi-cristallin, cette âme étant entourée par une gaine en matériau organique. Dans le cas présent, le liant était du Tylose et la gaine en Tylose, les deux étant fournis par la société Hoechst.

L'échantillon R5 est obtenu de la même manière que l'échantillon R4, mais il a subi un polissage mécanique analogue a celui de l'échantillon R3 en vue de diminuer sa rugosité.

Les caractéristiques des différents échantillons sont rassemblées dans le tableau 2 ci-dessous.

TABLEAU 2

| Revêt n° | Origine | méthode de préparation | phase quasi-cristalline majoritaire | % vol. de phase quasi-cristalline dans le revêtement | Rugosité Ra en μm |
|---|---|---|---|---|---|
| R1 | E1 | canon supersonique | icosaédrique | 70 % | 8-10 |
| R2 | E1 | canon supersonique + polissage | icosaédrique | 70 % | 1 |
| R3 | E1 | projection plasma + polissage | icosaédrique | 80 % | 1 |
| R4 | E2 | chalumeau à poudre | approximant de la phase décagonale | 50 % | 15-20 |
| R5 | E2 | chalumeau à poudre + polissage | approximant de la phase décagonale | 50 % | 3-5 |

## EXEMPLE 3

**Mesure de la porosité débouchant à la surface des échantillons**

L'examen métallographique des échantillons a été effectué après polissage des échantillons. La distribution de pores ouverts a été caractérisée à l'aide d'une imagerie quantitative. Les mesures ont éte effectuées à l'aide du système "VISILOG" commercialisé par la société Neosis, connecté par l'intermédiaire d'une camera CCD (commercialisé par la société Sony) à un microscope optique "Polyvar" commercialisé par la société Reichert et un tiroir électronique "Série 151" commercialisé par la société Imaging Technology. Tous les échantillons E1 a E6 et R1 à R5 ont été soumis à cette mesure. L'aire relative moyenne des pores débouchant en surface est indiquée dans le tableau 3. Pour les échantillons R1 et R4, la détermination de l'aire relative n'a pas eté possible car la rugosité est trop importante.

TABLEAU 3

| n° échant. | aire relative (%) |
|------------|-------------------|
| E1 | 4 |
| E2 | 6 |
| E3 | 1 |
| E4 | 1 |
| E5 | 0,3 |
| E6 | 0,3 |
| E7 | 3 |
| R1 | détermination impossible |
| R2 | 10 |
| R3 | 63 |
| R4 | détermination impossible |
| R5 | 51 |

## EXEMPLE 4

**Mesure du taux d'absorption du rayonnement infrarouge**

Afin de déterminer l'absorption infrarouge des divers échantillons tout en cherchant à différencier la part réfléchie spéculairement de celle réfléchie de manière diffuse, trois mesures complémentaires de reflectivité ont été effectuées :

- la réflectivité spéculaire (Rs), caractéristique d'une surface polie, a été mesurée en continu dans le domaine 2,5-40 $\mu$m sur un spectrophotomètre Perkin Elmer ;
- la réflectivité hémisphérique (Rh) permet d'intégrer avec la réflexion spéculaire, la réflexion diffuse. Les mesures correspondantes sont parfaitement adaptées pour les échantillons rugueux fortement diffusants ainsi que pour les échantillons polis possédant un forte porosité. Une sphère d'intégration en or a été utilisée pour les mesures de Rh. Les signaux enregistrés sont issus d'un bolomètre au germanium refroidi a la température de l'hélium liquide. Un jeu de réseaux utilisés comme monochromateurs a permis de réaliser les mesures pas a pas aux longueurs d'ondes de 2,5 - 5 - 5,8 et 10 $\mu$m
- la réflectivité bidirectionnelle (Rb), a été enregistrée en continu pour un angle d'incidence fixe du rayonnement sur l'échantillon (correspondant au maximum de signal réflechi à 0°) en fonction de l'angle de réflexion $\theta$ dans le domaine ($\theta$=-10°, $\theta$=+70°) et pour les longueurs d'onde 2,5 - 5 - 5,8 et 10 $\mu$m. Le dispositif utilisé est le même que le précédent, la sphère d'intégration étant retirée et l'échantillon placé sur un goniomètre possédant deux mouvements angulaires (angle d'incidence, angle de réflexion). L'intégration des courbes Rb = F($\theta$) et une normation permettent d'obtenir la réflectivité bidirectionnelle intégrée Rbi.

Ces mesures permettent de confirmer la faible réflectivité diffuse des échantillons brillants et de faible porosité et de définir le coefficient d'absorption A:

- pour les échantillons polis et de faible porosité, pour lesquels la réflexion diffuse est négligeable, A = 1-R, avec R=Rs ou Rbi ;
- pour les échantillons rugueux, pour lesquels la réflexion spéculaire est nulle ou faible, A = 1-Rh ;
- pour les échantillons polis et de forte porosité, pour lesquels il existe un réflexion spéculaire et une réflexion diffuse, A=1-Rh puisque Rh intègre la réflexion spéculaire et la réflexion diffuse.

Les valeurs caractéristiques du coefficient d'absorption, exprimées en (% ± 2%) sont données pour quatre longueurs d'onde et divers échantillons dans le tableau 4 ci-dessous.

**EXEMPLE 5 (COMPARATIF)**

**Absorption du rayonnement infrarouge par un revêtement de l'art antérieur**

Le feuillard Maxorb est une surface sélective en nickel ultra mince obtenue par électrodéposition à partir d'un bain de nickelage sur un tambour rotatif. Le feuillard est ensuite passé dans une solution produisant une surface d'oxyde noire. Enfin le feuillard reçoit ou non un adhésif qui autorise par exemple son installation sur la surface exposée au rayonnement d'un recupérateur d'énergie. Un collecteur recouvert de Maxorb a des performances supérieures de 20 - 30 % à celles d'un dispositif revêtu d'un peinture noire. Pour des températures d'utilisation pouvant aller jusqu'à 300 °C et pour des absorbeurs très profilés, la surface de Maxorb peut être produite directement sur la surface de l'absorbeur.

Les données caractéristiques d'un feuillard de Maxorb telles que mesurées sont portées dans le tableau 4. Les valeurs sont au plus égales à celles obtenues avec les revêtements polis de la présente invention (R2, R3 et R5) et nettement inférieures aux valeurs obtenues avec les revêtements rugueux (R1 et R4).

### TABLEAU 4

| Longueur d'onde<br>Echantillon | | 2,5 µm | 5 µm | 8 µm | 10 µm |
|---|---|---|---|---|---|
| E1 | | 38 | 38 | 38 | 38 |
| E2 | | 38 | 39 | 41 | 40 |
| R1 | rugueux | 62 | 62 | 62 | 60 |
| R2 | poli | 44 | 35 | 30 | 28 |
| R3 | poli | 49 | 44 | 43 | 42 |
| R4 | rugueux | 73 | 68 | 68 | 64 |
| R5 | poli | 65 | 60 | 60 | 54 |
| Maxorb | | 55 | 26 | 25 | 22 |

**EXEMPLE 6**

**Plaques chauffantes comprenant un revêtement d'alliage quasi-cristallin**

Deux plaques chauffantes carrées de 25 cm de côté ayant une épaisseur de 1 cm constituées par un alliage d'aluminium du type AU4G (2017A) ont été testées. L'une des plaques ne possède pas de revêtement, mais l'une de ses faces carrées a été sablée et possède une rugosité identique a celle de l'échantillon R1 de la présente invention. L'autre plaque possède une face recouverte du revêtement R3.

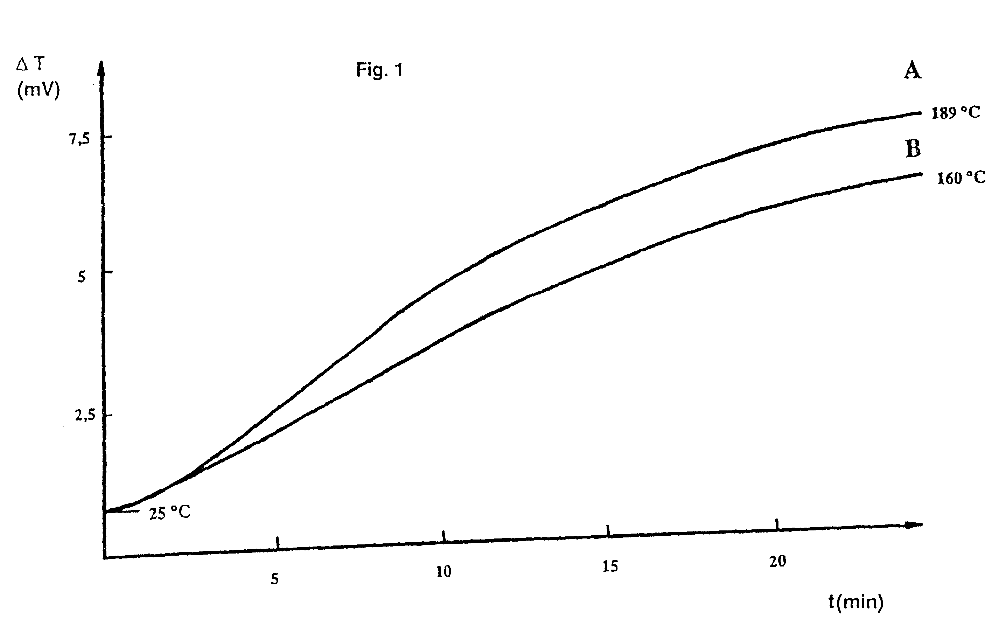

Chacune des plaques a été placée en regard d'une source de chauffage constituée par une lampe à halogène ayant une puissance de 1060 W et placée à 15 cm dans un plan vertical parallèle a celui de la plaque. La température de la face non exposée à la source lumineuse a été mesurée par un thermocouple maintenu en contact avec cette surface. La figure 1 reproduit les variations de température ΔT (exprimées en m t de signal de thermocouple) en fonction du temps t (en min) après l'allumage de la lampe, pour la plaque portant une couche d'alliage quasi-cristallin (courbe A) et pour la plaque sans revêtement (courbe B). L'on constate ainsi une augmentation de l'ordre de 20 % de l'absorption du rayonnement infrarouge.

Cet exemple montre clairement la supériorité de l'absorption lumineuse obtenue grâce au revêtement de la présente invention, et ceci en dépit d'une surface spécifique plus faible, puisque le revêtement R3 a été poli, contrairement à la plaque d'alliage d'aluminium sont le rugosité a été artificiellement augmentée. Le gain d'énergie peut être estimé à 20% dans le présent exemple.

**Revendications**

1. Dispositif absorbant le rayonnement infrarouge, **caractérisé en ce qu'**il comprend comme élément absorbant le rayonnement infrarouge dans le domaine des longueurs d'onde supérieures à 2 μm, un élément en alliage quasi-cristallin sous forme de couche mince d'épaisseur supérieure à 1 μm déposée sur un substrat, ledit élément étant constitué d'une ou plusieurs phases quasi-cristallines dont le volume représente au moins 40 % en volume de l'alliage quasi-cristallin, une phase quasi-cristalline étant soit une phase quasi-cristalline au sens strict qui présente des symétries de rotation normalement incompatibles avec la symétrie de translation, c'est-à-dire des symétries d'axe de rotation d'ordre 5, 8, 10 et 12, soit une phase approximante ou un composé approximant qui est un cristal vrai dont la structure cristallographique reste compatible avec la symétrie de translation, mais présente dans le cliché de diffraction d'électrons, des figures de diffraction dont la symétrie est proche des axes de rotation 5, 8, 10 ou 12.

2. Dispositif absorbant le rayonnement infrarouge selon la revendication 1, **caractérisé en ce que** l'alliage quasi-cristallin contient comme phase quasi-cristalline, une phase icosaédrique de groupe ponctuel m$\overline{35}$ ou une phase décagonale du groupe ponctuel 10/mmm.

3. Dispositif absorbant le rayonnement infrarouge selon la revendication 1, **caractérisé en ce que** l'alliage quasi-cristallin contient au moins 80 % en volume d'une phase quasi-cristalline ou d'un approximant.

4. Dispositif absorbant le rayonnement infrarouge selon la revendication 1. **caractérisé en ce que** l'alliage quasi-cristallin présente l'une des compositions nominales suivantes, qui sont données en pourcentage atomique :

   - $Al_aCu_bFe_cX_dY_eI_g$, (I) dans laquelle X représente au moins un élément choisi parmi B, C, P, S, Ge et Si, Y représente au moins un élément choisi parmi V, Mo, Ti, Zr, Nb, Cr, Mn, Ru, Rh, Ni, Mg, W, Hf, Ta et les terres rares, I représente les impuretés d'élaboration inévitables, $0 \leq g \leq 2$, $14 \leq b \leq 30$, $7 \leq c \leq 20$, $0 \leq d \leq 5$, $21 \leq b+c+e \leq 45$, et $a+b+c+d+e+g=100$ ;
   - $Al_aPd_bX_cY_dT_eI_g$ (II) dans laquelle X représente au moins un métalloïde choisi parmi B, C, Si, Ge, P, et S ; Y représente au moins un métal choisi parmi Fe, Mn, V, Ni, Cr, Zr, Hf, Mo, W, Nb, Ti, Rh, Ru, Re, Ta ; T est au moins une terre rare ; I représente les impuretés d'élaboration inévitables ; avec $a+b+c+d+e+f+g=100$ ; $17 \leq b \leq 30$ ; $0 \leq c \leq 8$ ; $5 \leq d \leq 15$ ; $0 \leq e \leq 4$ ; $0 \leq g \leq 2$ ;
   - $Al_aCu_bCo_cX_dY_eT_fI_g$ (III) dans laquelle X représente au moins un métalloïde choisi parmi B, C, Si, Ge, P et S ; Y représente au moins un métal choisi parmi Fe, Mn, V, Ni, Cr, Zr, Hf, Mo, W, Nb, Ti, Rh, Ru, Re ; T est au moins une terre rare ; I représente les impuretés d'élaboration inévitables; avec $a+b+c+d+e+f+g=100$ ; $14 \leq b \leq 27$ ; $8 \leq c \leq 24$ ; $28 \leq b+c+e \leq 45$ ; $0 \leq f \leq 4$ ; $0 \leq d \leq 5$; $0 \leq g \leq 2$ ;
   - $Al_aX_dY_eI_g$, (IV) dans laquelle X représente au moins un élément choisi parmi B, C, P, S, Ge et Si, Y représente au moins un élément choisi parmi V, Mo, Cr, Mn, Fe, Co, Ni, Ru, Rh et Pd, I représente les impuretés d'élaboration inévitables, $0 \leq g \leq 2$, $0 \leq d \leq 5$, $18 \leq e \leq 29$, et $a+d+e+g=100$ ;
   - $Al_aCu_bCo_{b'}(B,C)_cM_dN_eI_f$ (V) dans laquelle M représente au moins un élément choisi parmi Fe, Mn, V, Ni, Cr, Ru, Os, Mo, Mg, Zn, Pd ; H représente au moins un élément choisi parmi w, Ti, Zr, Hf, Rh, Nb, Ta, Y, Si, Ge, les terres rares ; I représente les impuretés d'élaboration inévitables; avec $a+b+b'+c+d+e+f=100$ ; $a \geq 50$ ; $0 \leq b \leq 14$ ; $0 \leq b' \leq 22$ ; $0 \leq b+b' \leq 30$ ; $0 \leq c \leq 5$ ; $8 \leq d \leq 30$ ; $0 \leq e \leq 4$ ; $f \leq 2$.

5. Dispositif absorbant le rayonnement infrarouge selon la revendication 1, **caractérisé en ce que** l'épaisseur de la couche d'alliage quasi-cristallin est de 1 μm à 10 μm.

6. Dispositif absorbant le rayonnement infrarouge selon la revendication 1 **caractérisé en ce que** l'épaisseur de la couche est comprise entre 10 μm et 50 μm.

7. Dispositif absorbant le rayonnement infrarouge selon la revendication 1, **caractérisé en ce que** la couche d'alliage quasi-cristallin a une porosité de l'ordre de 5 à 10 %.

8. Dispositif absorbant le rayonnement infrarouge selon la revendication 1 **caractérisé en ce que** la couche d'alliage quasi-cristallin est pratiquement exempte de porosité.

9. Dispositif absorbant le rayonnement infrarouge selon la revendication 1 **caractérisé en ce que** la couche d'alliage quasi-cristallin est poreuse, le diamètre moyen des pores étant entre environ 1 et 30 μm.

**10.** Dispositif absorbant le rayonnement infrarouge selon la revendication 1, **caractérisé en ce que** l'alliage quasi-cristallin est sous forme d'un cristal monograin.

**11.** Dispositif absorbant le rayonnement infrarouge selon la revendication 1, **caractérisé en ce qu'**il constitue un bolomètre, dans lequel la couche d'alliage quasi-cristallin joue à la fois le rôle d'absorbeur du rayonnement infrarouge et d'élément sensible résistif.

**12.** Dispositif absorbant le rayonnement infrarouge selon la revendication 1, **caractérisé en ce qu'**il constitue un capteur de température, dans lequel le substrat est constitué par un thermocouple, l'alliage quasi-cristallin enrobant le thermocouple.

**13.** Dispositif absorbant le rayonnement infrarouge selon la revendication 1, pour la conversion photothermique.

**14.** Dispositif absorbant le rayonnement infrarouge selon la revendication 13, **caractérisé en ce qu'**il constitue un capteur à fluide caloporteur pour chauffage solaire.

**15.** Dispositif absorbant le rayonnement infrarouge selon la revendication 13, **caractérisé en ce qu'**il constitue un capteur pour réfrigération solaire.

**16.** Dispositif absorbant le rayonnement infrarouge selon la revendication 13, **caractérisé en ce qu'**il constitue un capteur passif.

**17.** Dispositif absorbant le rayonnement infrarouge selon la revendication 1, **caractérisé en ce qu'**il constitue une plaque chauffante.

**Claims**

**1.** Infrared radiation-absorbing device, **characterized in that** it comprises as the infrared radiation-absorbing element in the wavelength range above 2 μm, a quasi-crystalline alloy element in the form of a film with a thickness exceeding 1 μm deposited on a substrate, said element being constituted by one or more quasi-crystalline phases representing at least 40 vol.% of the quasi-crystalline alloy, a quasi-crystalline phase either being a quasi-crystalline phase in the strict sense having rotation symmetries normally incompatible with the translation symmetry, i.e. symmetries with a rotation axis of order 5, 8, 10 and 12, or an approximate phase or an approximate compound, which is a true crystal, whose crystallographic structure remains compatible with the translation symmetry, but in the electron diffraction image has diffraction patterns, whose symmetry is close to the rotation axes 5, 8, 10 or 12.

**2.** Device absorbing infrared radiation according to claim 1, **characterized in that** the quasi-crystalline alloy contains as a quasi-crystalline phase, an icosahedric phase of point group $m\overline{35}$ or a decagonal phase of the point group 10/mmm.

**3.** Device absorbing infrared radiation according to claim 1, **characterized in that** the quasi-crystalline alloy contains at least 80% by volume of a quasi-crystalline phase or an approximating phase.

**4.** Device absorbing infrared radiation according to claim 1, **characterized in that** the quasi-crystalline alloy has one of the following nominal compositions which are given in atomic percentage: Si, Ge, the rare earths; I represents the unavoidable production impurities; with a+b+b'+c+d+e+f = 100; a ≥ 50; 0 ≤ b ≤ 14; 0 ≤ b' ≤ 22; 0 < b+b' ≤ 30; 0 ≤ c ≤ 5; 8 ≤ d ≤ 30; 0 ≤ e ≤ 4; f ≤ 2.

**5.** Device absorbing infrared radiation according to claim 1, **characterized in that** the thickness of the layer of quasi-crystalline alloy is 1 to 10 μm.

**6.** Device absorbing infrared radiation according to claim 1, **characterized in that** the thickness of the layer is between 10 μm and 50 μm.

**7.** Device absorbing infrared radiation according to claim 1, **characterized in that** the layer of quasi-crystalline alloy has a porosity of the order of 5 to 10%.

**8.** Device absorbing infrared radiation according to claim 1, **characterized in that** the layer of quasi-crystalline alloy is practically free of porosity.

**9.** Device absorbing infrared radiation according to claim 1, **characterized in that** the layer of quasi-crystalline alloy is porous, the mean diameter of the pores being between about 1 and 30 µm.

**10.** Device absorbing infrared radiation according to claim 1, **characterized in that** the layer of quasi-crystalline alloy is in the form of a single grain crystal.

**11.** Device absorbing infrared radiation according to claim 1, **characterized in that** it constitutes a bolometer, in which the layer of quasi-crystalline alloy plays both the role of infrared radiation absorber and of a resistive sensitive element.

**12.** Device absorbing infrared radiation according to claim 1, **characterized in that** it constitutes a temperature sensor, in which the substrate is constituted by a thermocouple, the quasi-crystalline alloy encasing the thermocouple.

**13.** Device absorbing infrared radiation according to claim 1, for photothermal conversion.

**14.** Device absorbing infrared radiation according to claim 13, **characterized in that** it constitutes a collector with a heat exchange fluid for solar heating.

**15.** Device absorbing infrared radiation according to claim 13, **characterized in that** it constitutes a collector for solar refrigeration.

**16.** Device absorbing infrared radiation according to claim 13, **characterized in that** it constitutes a passive collector.

**17.** Device absorbing infrared radiation according to claim 1, **characterized in that** it constitutes a hot plate.

**Patentansprüche**

**1.** Infrarotstrahlung absorbierende Vorrichtung, **dadurch gekennzeichnet, dass** sie als Element, das die Infrarotstrahlung im Bereich der Wellenlängen größer als 2 µm absorbiert, ein Element aus einer quasikristallinen Legierung in Form einer auf einem Substrat abgeschiedenen dünnen Schicht der Dicke größer als 1 µm umfasst, wobei das genannte Element aus einer oder mehreren quasikristallinen Phasen besteht, deren Volumen mindestens 40 Vol.-% der quasikristallinen Legierung darstellt, wobei eine quasikristalline Phase entweder eine quasikristalline Phase im strengen Sinn ist, die Rotationssymmetrien, die normalerweise mit der Translationssymmetrie inkompatibel sind, d.h. Symmetrien einer Rotationsachse der Ordnung 5, 8, 10 und 12 zeigt, oder eine Approximantenphase oder eine Approximantenverbindung ist, die ein echter Kristall ist, dessen kristalographische Struktur mit der Translationssymmetrie kompatibel bleibt, aber im Elektronenbeugungsbild Beugungsfiguren zeigt, deren Symmetrie nahe den Rotationsachsen 5, 8, 10 oder 12 ist.

**2.** Infrarotstrahlung absorbierende Vorrichtung nach Anspruch 1, **dadurch gekennzeichnet, dass** die quasikristalline Legierung als quasikristalline Phase eine ikosaedrische Phase der Punktgruppe $m\overline{3}\overline{5}$ oder eine dekagonale Phase der Punktgruppe 10/mmm enthält.

**3.** Infrarotstrahlung absorbierende Vorrichtung nach Anspruch 1, **dadurch gekennzeichnet, dass** die quasikristalline Legierung mindestens 80 Vol.-% einer quasikristallinen Phase oder einer Approximante enthält.

**4.** Infrarotstrahlung absorbierende Vorrichtung nach Anspruch 1, **dadurch gekennzeichnet, dass** die quasikristalline Legierung eine der folgenden Sollzusammensetzungen aufweist, die in Atomprozenten gegeben sind:

$$- \qquad Al_aCu_bFe_cX_dY_eI_g \qquad\qquad (I)$$

worin X wenigstens ein unter B, C, P, S, Ge und Si gewähltes Element darstellt, Y wenigstens ein unter V, Mo, Ti, Zr, Nb, Cr, Mn, Ru, Rh, Ni, Mg, W, Hf, Ta und den seltenen Erden gewähltes Element darstellt, I die unvermeidlichen

Herstellungsverunreinigungen darstellt, $0 \leq g \leq 2$, $14 \leq b \leq 30$, $7 \leq c \leq 20$, $0 \leq d \leq 5$, $21 \leq b+c+e \leq 45$ und $a+b+c+d+e+g=100$;

$$- \qquad Al_a Pd_b X_c Y_d T_e I_g \qquad\qquad (II)$$

worin X wenigstens ein unter B, C, Si, Ge, P und S gewähltes Halb- bzw. Nichtmetall darstellt, Y wenigstens ein unter Fe, Mn, V, Ni, Cr, Zr, Hf, Mo, W, Nb, Ti, Rh, Ru, Re, Ta gewähltes Metall darstellt, T wenigstens eine seltene Erde ist, I die unvermeidlichen Herstellungsverunreinigungen darstellt, mit $a+b+c+d+e+f+g=100$, $17 \leq b \leq 30$, $0 \leq c \leq 8$, $5 \leq d \leq 15$, $0 \leq e \leq 4$, $0 \leq g \leq 2$;

$$- \qquad Al_a Cu_b Co_c X_d Y_e T_f I_g \qquad\qquad (III)$$

worin X wenigstens ein unter B, C, Si, Ge, P und S gewähltes Halb- bzw. Nichtmetall darstellt, Y wenigstens ein unter Fe, Mn, V, Ni, Cr, Zr, Hf, Mo, W, Nb, Ti, Rh, Ru, Re gewähltes Metall darstellt, T wenigstens eine seltene Erde ist, I die unvermeidlichen Herstellungsverunreinigungen darstellt, mit $a+b+c+d+e+f+g=100$, $14 \leq b \leq 27$, $8 \leq c \leq 24$, $28 \leq b+c+e \leq 45$, $0 \leq f \leq 4$, $0 \leq d \leq$, $0 \leq g \leq 2$;

$$- \qquad Al_a X_d Y_e I_g \qquad\qquad (IV)$$

worin X wenigstens ein unter B, C, P, S, Ge und Si gewähltes Element darstellt, Y wenigstens ein unter V, Mo, Cr, Mn, Fe, Co, Ni, Ru, Rh und Pd gewähltes Element darstellt, I die unvermeidlichen Herstellungsverunreinigungen darstellt, $0 \leq g \leq 2$, $0 \leq d \leq 5$, $18 \leq e \leq 29$ und $a+d+e+g=100$;

$$- \qquad Al_a Cu_b Co_{b'}(B,C)_c M_d N_e I_f \qquad\qquad (V)$$

worin M wenigstens ein unter Fe, Mn, V, Ni, Cr, Ru, Os, Mo, Mg, Zn, Pd gewähltes Element darstellt, N wenigstens ein unter W, Ti, Zr, Hf, Rh, Nb, Ta, Y, Si, Ge, den seltenen Erden gewähltes Element darstellt, I die unvermeidlichen Herstellungsverunreinigungen darstellt, mit $a+b+b'+c+d+e+f=100$, $a \geq 50$, $0 \leq b \leq 14$, $0 \leq b' \leq 22$, $0 < b+b' \leq 30$, $0 \leq c \leq 5$, $8 \leq d \leq 30$, $0 \leq e \leq 4$, $f \leq 2$.

5. Infrarotstrahlung absorbierende Vorrichtung nach Anspruch 1, **dadurch gekennzeichnet, dass** die Dicke der Schicht von quasikristalliner Legierung 1 µm bis 10 µm beträgt.

6. Infrarotstrahlung absorbierende Vorrichtung nach Anspruch 1, **dadurch gekennzeichnet, dass** die Dicke der Schicht zwischen 10 µm und 50 µm liegt.

7. Infrarotstrahlung absorbierende Vorrichtung nach Anspruch 1, **dadurch gekennzeichnet, dass** die Schicht von quasikristalliner Legierung eine Porosität der Größenordnung 5 bis 10% hat.

8. Infrarotstrahlung absorbierende Vorrichtung nach Anspruch 1, **dadurch gekennzeichnet, dass** die Schicht von quasikristalliner Legierung praktisch frei von Poren ist.

9. Infrarotstrahlung absorbierende Vorrichtung nach Anspruch 1, **dadurch gekennzeichnet, dass** die Schicht von quasikristalliner Legierung porös ist, wobei der mittlere Porendurchmesser zwischen ungefähr 1 und 30 µm liegt.

10. Infrarotstrahlung absorbierende Vorrichtung nach Anspruch 1, **dadurch gekennzeichnet, dass** die quasikristalline Legierung in Form eines aus einem Korn bestehenden Kristalls vorliegt.

11. Infrarotstrahlung absorbierende Vorrichtung nach Anspruch 1, **dadurch gekennzeichnet, dass** sie ein Bolometer bildet, in welchem die Schicht von quasikristalliner Legierung zugleich die Rolle eines Absorbers für infrarote Strahlung wie eines empfindlichen Widerstandselements spielt.

12. Infrarotstrahlung absorbierende Vorrichtung nach Anspruch 1, **dadurch gekennzeichnet, dass** sie einen Temperaturaufnehmer bildet, in welchem das Substrat aus einem Thermopaar besteht, wobei die quasikristalline Legierung das Thermopaar umkleidet.

13. Infrarotstrahlung absorbierende Vorrichtung nach Anspruch 1 für die photothermische Konversion.

14. Infrarotstrahlung absorbierende Vorrichtung nach Anspruch 13, **dadurch gekennzeichnet, dass** sie einen Aufnehmer mit Wärme tragendem Fluid zur Solarheizung bildet.

15. Infrarotstrahlung absorbierende Vorrichtung nach Anspruch 13, **dadurch gekennzeichnet, dass** sie einen Aufnehmer zur Solarkühlung bildet.

16. Infrarotstrahlung absorbierende Vorrichtung nach Anspruch 13, **dadurch gekennzeichnet, dass** sie einen passiven Aufnehmer bildet.

17. Infrarotstrahlung absorbierende Vorrichtung nach Anspruch 1, **dadurch gekennzeichnet, dass** sie eine heizende Platte bildet.

Fig. 1